# EUROPEAN PATENT SPECIFICATION

(11) **EP 3 521 375 B1**
(45) Date of publication and mention of the grant of the patent: **23.03.2022**
(21) Application number: 17855674.2
(22) Date of filing: 08.09.2017
(51) Int. Cl.: C08L 101/10, B29C 73/22, C08L 23/20, C09K 3/10, C08L 23/26, C08L 43/04, C09J 123/22, C09J 123/26, C09J 143/04, C09J 201/10, B60C 5/14

(54) **PNEUMATIC TIRE COMPRISING A SEALANT AND USE OF A SEALANT IN A PNEUMATIC TIRE**
LUFTREIFEN MIT DICHTMITTEL UND VERWENDUNG VON EINEM DICHTMITTEL
PNEUMATIQUE COMPRENANT UN MATÉRIAU D'ÉTANCHÉITÉ, ET UTILISATION D'UN MATÉRIAU D'ÉTANCHÉITÉ DANS UN PNEUMATIQUE

(30) Priority: 27.09.2016 JP 2016188693
(43) Date of publication of application: 07.08.2019
(73) Proprietor: Bridgestone Corporation, Tokyo 104-8340 (JP)
(72) Inventor: MATSUSHITA Junko, Tokyo 104-8340 (JP)
(74) Representative: Lang, Johannes
(86) International application number: PCT/JP2017/032549
(87) International publication number: WO 2018/061716

(56) References cited:
- WO-A1-89/11514
- WO-A1-2006/046473
- JP-A- S5 269 460
- JP-A- 2009 067 974
- JP-A- 2010 095 552
- JP-A- 2010 229 199
- JP-A- 2012 082 237
- JP-A- 2014 009 244
- JP-A- 2014 141 636
- JP-A- 2016 056 365
- JP-A- 2016 164 233
- JP-A- 2016 528 371
- US-A1- 2004 180 154
- US-A1- 2012 141 787
- US-B1- 8 637 605
- Norbert Willenbacher ET AL: "4-1 4.1 Polyisobutene (PIB): General Properties and Applications 4-1 4.2 Polyisobutene-Based Pressure-Sensitive Adhesives 4-5 4.3 Rheology, Viscoelasticity, and Adhesion of Polyisobutylene-Based Pressure-Sensitive Adhesives", , 24 July 2008 (2008-07-24), XP055681789, Retrieved from the Internet: URL:https://www.mvm.kit.edu/download/Wil_L ebedeva_PSA_Handbook_Aug08.pdf [retrieved on 2020-04-01] & Basf: "OPPANOL - more than just polyisobutene", , 31 March 2020 (2020-03-31), XP055681791, Retrieved from the Internet: URL:https://www.basf.com/global/en/product s/segments/industrial_solutions/performanc e_chemicals/business/fuel-and-lubricant-so lutions/polyisobutenes--pib-/oppanol_more- than-just-polyisobutene.html [retrieved on 2020-04-01]

## Description

### TECHNICAL FIELD

The present disclosure relates to curable compositions and tire sealant compositions.

### BACKGROUND

Some known puncture-resistant pneumatic tires comprise a layer of sealant material disposed along the inner surface of the tire. In a tire provided with a layer of sealant material, when a nail or other foreign object penetrates through the tread, the sealant material functions to automatically seal the puncture hole (see, e.g., PTL 1).

However, conventional sealant materials are difficult to process due to high tackiness and flowability. This complicates the operation of providing the sealant material on the inner surface of the tire and may cause inclusion of air bubbles. Further, it becomes difficult to keep quality such as puncture repair ability (i.e., shape retention and elongation) stable.

### CITATION LIST

### Patent Literature

[PTL 1] JP2009269446A

### SUMMARY

### (Technical Problem)

An object of the present disclosure is therefore to provide a tire sealant composition which are capable of maintaining a balance among processability, shape retention, and elongation at a high level.

As used herein, "shape retention" means the ability to maintain shape over time.

### (Solution to Problem)

Specifically, in a first aspect the present invention discloses a pneumatic tire, in which a tire sealant composition is used having a cured product of the curable composition as a sealant, said tire sealant composition comprising a curable composition comprising the following components A to C:
A: an alkoxysilyl-modified polyisobutylene;
B: one or more polymers having a number average molecular weight of 50,000 or less, which are selected from the group consisting of polybutene, polyisobutylene, polyisobutylene butadiene, polypentene, and polyisopentene; and
C: one or more resins selected from the group consisting of C5 resin, C9 resin, C5-C9 resin, dicyclopentadiene resin, rosin resin, alkylphenol resin, and terpene phenol resin;
wherein the component B is included in an amount of 50 parts by mass to 120 parts by mass per 100 parts by mass of the component A, and
wherein the component C is included in an amount of 10 parts by mass to 20 parts by mass per 100 parts by mass of the component A.

Preferably the component A of the curable composition has a number average molecular weight of 2,500 to 10,000.

In a second aspect the present invention discloses the use of the tire sealant composition disclosed above in a pneumatic tire.

### (Advantageous Effect)

According to the present disclosure, it is possible to provide a curable composition and a tire sealant composition which are capable of maintaining a balance among processability, shape retention, and elongation at a high level.

### BRIEF DESCRIPTION OF THE DRAWINGS

In the accompanying drawings:

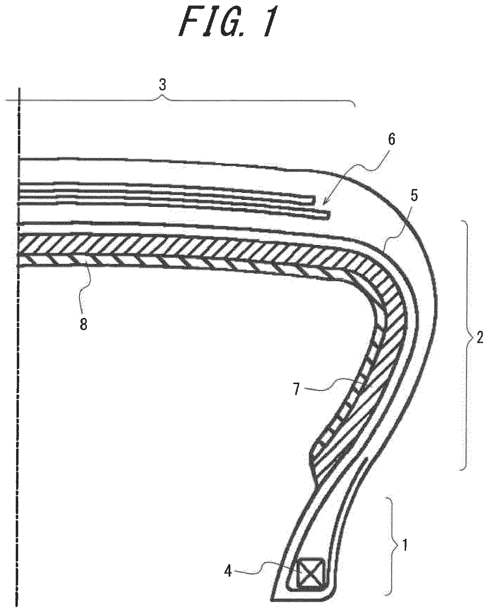

FIG. 1 is a partial cross-sectional view illustrating an example of a pneumatic tire in which a tire sealant composition according to the present invention is used.

### DETAILED DESCRIPTION

### (Curable Composition, Tire Sealant Composition)

Hereinafter, a curable composition of the present disclosure will be described in detail based on one embodiment thereof.

The curable composition of the present invention comprises component A, component B, component C, and an optional component.

A tire sealant composition of the present invention comprises a curable composition of the present invention. The present invention discloses a pneumatic tire in which the tire sealant composition of the present invention is used has a cured product of the curable composition as a sealant.

The present invention discloses also the use of the tire sealant composition of the present invention comprising the curable composition of the present invention in a pneumatic tire.

### <Component A>

The component A is a polyisobutylene having a reactive silicon group, wherein the reactive silicon group is an alkoxy group.

Processability can be improved by blending the polymer into the curable composition.

### «Reactive Silicon Group-Containing Polymer»

The term "reactive silicon group" as used herein means "a group which has a silicon atom to which an alkoxy group is bound and which can be crosslinked by a silanol condensation reaction."

Alkoxy group is used for mild hydrolysis and easy handling.

In addition to the reactive silicon group, the reactive silicon group-containing polymer may have other functional groups such as amino and/or mercapto group, which may react with an epoxy group.

The active silicon group-containing polymer is an alkoxysilyl-modified polyisobutylene . The polymer is a polyisobutylene as a backbone, which comprises a silyl group having an alkoxy group at terminals or side chains.

The alkoxysilyl-modified polymer improves the processability.

The reactive silicon group-containing polymer can be produced by the method described in JPS61268720A.

Examples of an alkoxysilyl-modified polyisobutylene that derived from Penguin Seal IB7000 available from Sunstar Engineering Inc., and those available under the tradenames Silyl 5B25, SAT200, and SAT030 from Kaneka Corporation.

The alkoxysilyl-modified polyisobutylene can have any desired number average molecular weight, preferably a number average molecular weight of 2,000 to 10,000. When the number average molecular is 2,000 or more, sufficient elongation can be obtained while allowing desired physical properties to be developed. When the number average molecular is 10,000 or less, dissociation of the reactive silicon group of the component A can be prevented.

### <Component B>

The component B is one or more polymers having a number average molecular weight of 50,000 or less, which are selected from the group consisting of polybutene, polyisobutylene, polyisobutylene butadiene, polypentene, and polyisopentene.

The component B functions as a plasticizer. With the component B being included, tackiness and elongation can be improved.

The polymer as the component B can have any desired number average molecular weight so long as it is 50,000 or less, preferably has a number average molecular weight of 400 to 40,000. When the number average molecular weight is 50,000 or less, mixer kneading is possible at 100°C or below. When the number average molecular weight is 400 or more, it is possible to prevent the components from transferring to the tire inner liner. When the number average molecular weight is 40,000 or less, sufficient dispersion can be obtained even with kneading at 100°C or below.

The component B is included in an amount of 50 parts by mass to 120 parts by mass, per 100 parts by mass of the component A.

When the component B is included in an amount of 150 parts by mass or less per 100 parts by mass of the component A, shape retention and elongation can be improved.

### <Component C>

The component C is one or more resins selected from the group consisting of C5 resin, C9 resin, C5-C9 resin, dicyclopentadiene resin, rosin resin, alkylphenol resin, and terpene phenol resin.

The component C functions as a tackifier. With the component C being included, tackiness and elongation can be improved.

The component C is included in an amount of 10 parts by mass to 20 parts by mass, per 100 parts by mass of the component A.

When the component C is included in an amount of 20 parts by mass or less per 100 parts by mass of the component A, shape retention and elongation can be improved.

### «C5 Resin»

C5 resin refers to a C5 synthetic petroleum resin, which is a solid polymer obtained by polymerizing a C5 fraction using a Friedel Crafts catalyst such as AlCl₃ or BF₃.

Any desired C5 resin can be selected as appropriate and examples thereof include (i) copolymers which comprise isoprene, cyclopentadiene, 1,3-pentadiene, 1-pentene or the like as a main component; (ii) copolymers of 2-pentene and dicyclopentadiene; and (iii) polymers which comprise 1,3-pentadiene as a main component. These C5 resins may be used singly or in combination of two or more.

### «C9 Resin»

C9 resin refers to a C9 synthetic petroleum resin, which is a solid polymer obtained by polymerizing a C9 fraction using a Friedel Crafts catalyst such as AlCl₃ or BF₃.

Any desired C9 resin can be selected as appropriate and examples thereof include copolymers which comprise indene, methylindene, α-methylstyrene, vinyltoluene or the like as a main component. These C9 resins may be used singly or in combination of two or more.

### <<C5-C9 Resin»

C5-C9 resin refers to a C5-C9 synthetic petroleum resin, which is a solid polymer obtained by polymerizing a C5-C11 fraction using a Friedel Crafts catalyst such as AlCl₃ or BF₃.

Any desired C5-C9 resin can be selected as appropriate and examples thereof include copolymers which comprise styrene, vinyltoluene, α-methylstyrene, indene or the like as a main component. These C5-C9 resins may be used singly or in combination of two or more.

### «Dicyclopentadiene Resin»

Any desired dicyclopentadiene resin can be selected as appropriate and examples thereof include dicyclopentadiene and indene, These dicyclopentadiene resins may be used singly or in combination of two or more.

### «Rosin Resin»

Any desired rosin resin can be selected as appropriate and examples thereof include natural resin rosins such as gum rosin, tall oil rosin, and wood rosin; polymerized rosin, and partially hydrogenated rosin thereof; glycerin ester rosin, and partially hydrogenated rosin and completely hydrogenated rosin thereof; and pentaerythritol ester rosin, and partially hydrogenated rosin and polymerized rosin thereof. These rosin resins may be used singly or in combination of two or more.

### «Alkylphenol Resin»

Any desired alkylphenol resin can be selected as appropriate and examples thereof include alkylphenol-acetylene resin such as p-tert-butylphenol-acetylene resin; and alkylphenol-formaldehyde resin having a low degree of polymerization. These alkylphenol resins may be used singly or in combination of two or more.

### «Terpene Phenol Resin»

The terpene phenol resin can be obtained by reacting terpenes with various phenols using a Friedel Crafts catalyst or by further condensing with formalin.

Any desired terpene can be selected as appropriate and preferred examples thereof include monoterpene hydrocarbons such as α-pinene and limonene. Preferred are those containing α-pinene, with α-pinene being particularly preferred.

### <Optional component>

Any desired optional component can be selected as appropriate and examples thereof include curing agents, plasticizers, antioxidants, UV absorbers, light stabilizers, and surface modifiers.

### «Curing Agent»

Curing by post-crosslinking can be accelerated by mixing the curing agent with a base material containing the components A to C described above.

When the base material is mixed with the curing agent, curing gradually occurs by post-crosslinking due to moisture in the air, so that processability can be improved as compared with conventional vulcanized sealants.

Any desired curing agent can be used as appropriate and examples thereof include tin carboxylates, amine compounds, and calcium carbonate. These curing agents may be used alone or in combination of two or more.

The curing agent can be included in any desired amount as appropriate, preferably in an amount of 0.5 parts by mass to 10 parts by mass per 100 parts by mass of the component A.

### <<Plasticizer >>

Any desired plasticizer can be selected as appropriate and examples thereof include diisodecyl phthalate (DIDP) and diisononyl phthalate (DINP). These plasticizers may be used alone or in combination of two or more.

The plasticizer can be included in any desired amount as appropriate, preferably in an amount of 30 parts by mass to 300 parts by mass per 100 parts by mass of the component A.

### «Antioxidant»

Any desired antioxidant can be selected as appropriate and examples thereof include amines and hindered amines. These antioxidants may be used alone or in combination of two or more.

### «UV Absorber»

Any desired UV absorber can be selected as appropriate and examples thereof include hindered amines and aromatic amines. These UV absorbers may be used alone or in combination of two or more.

### «Light Stabilizer»

Any desired light stabilizer can be selected as appropriate and examples thereof include hindered amines and phosphate compounds. These light stabilizers may be used alone or in combination of two or more.

### «Surface Modifier»

Any desired surface modifier can be used and examples thereof include calcium carbonate and stearic acid. These surface modifiers may be used alone or in combination of two or more.

FIG. 1 is a partial cross-sectional view illustrating an example of a pneumatic tire in which a tire sealant composition according the present invention is used. In this example of a pneumatic tire, the tire comprises a pair of beads 1, a pair of sidewalls 2 extending radially outside the the respective beads 1, and a tread 3 bridging between the sidewalls 2. A carcass 5 composed of a carcass ply extending in a toroidal shape is disposed between bead cores 4 of the beads 1 and a belt 6 having two belt layers is disposed radially outside the tread 3 of the carcass 5, thereby forming a skeleton of the tire. In this example of a pneumatic tire, from the carcass 5 side, a sealant 7 and an inner liner 8 are sequentially disposed on the inner surface side of the carcass 5.

The sealant 7 can be of any desired thickness and is preferably 1.5 mm to 4.0 mm in thickness.

Thus, the present invention discloses a pneumatic tire, in which a tire sealant composition is used having a cured product of the curable composition as a sealant, said sealant composition comprising a curable composition comprising the following components A to C:
A: an alkoxysilyl-modified polyisobutylene;
B: one or more polymers having a number average molecular weight of 50,000 or less, which are selected from the group consisting of polybutene, polyisobutylene, polyisobutylene butadiene, polypentene, and polyisopentene; and
C: one or more resins selected from the group consisting of C5 resin, C9 resin, C5-C9 resin, dicyclopentadiene resin, rosin resin, alkylphenol resin, and terpene phenol resin;
wherein the component B is included in an amount of 50 parts by mass to 120 parts by mass per 100 parts by mass of the component A, and
wherein the component C is included in an amount of 10 parts by mass to 20 parts by mass per 100 parts by mass of the component A.

With the curable composition of the present disclosure, a balance among processability, shape retention, and elongation can be maintained at a high level.

In the curable composition of the present disclosure, the component A preferably has a number average molecular weight of 2,500 to 10,000. With this configuration, dissociation of the reactive silicon group of the component A can be prevented.

According to the sealant composition of the present invention, it is possible to maintain a balance among processability, shape retention, and elongation at a high level.

### EXAMPLES

The present disclosure will be described in detail based on Examples, which however shall not be construed as limiting the scope of the present disclosure. Appropriate modifications and alterations can be made without departing from the spirit of the present disclosure.

Compositions of Reference Examples 1-7, 10, Inventive Examples 8, 9, 11 and Comparative Examples 1-5 were prepared based on the recipes shown in Table 1. A composition of Reference Example 3 was prepared based on the recipe shown in Table 1.

For the compositions of Reference Examples 1-7, 10, Inventive Examples 8, 9, 11 and Comparative Examples 1-5, the following evaluations were made. For the composition of Reference Example 3, the following evaluations were made. The numbers in "recipe" in Table 1 indicate parts by mass.

### <Processability>

For the compositions of Reference Examples 1-7, 10, Inventive Examples 8, 9, 11 and Comparative Examples 1-5, flow characteristics were measured with a capillograph at 60°C and 50 mm/min using a die having a diameter of 1 mm to evaluate processability based on the following viscosity criteria. For the composition of Reference Example 3, flow characteristics were measured with a capillograph at 60°C and 50 mm/min using a die having a diameter of 1 mm to evaluate processability based on the following viscosity criteria. The results are shown in Table 1.

### <<Evaluation Criteria>>

A: Less than 80 Pa·s
B: 80 Pa·s or more and less than 150 Pa·s
C: 150 Pa·s or more

### <Shape Retention>

For each of the compositions of Reference Examples 1-7, 10, Inventive Examples 8, 9, 11 and Comparative Examples 1-5, a sample cut into a 3 cm × 3 cm square was placed in a 70°C oven and allowed to stand for 3 days to evaluate shape retention based on the following criteria. For the composition of Reference Example 3, a sample cut into a 3 cm × 3 cm square was placed in a 70°C oven and allowed to stand for 3 days to evaluate shape retention based on the following criteria. The results are shown in Table 1.

### <<Evaluation Criteria>>

S: Deformation amount of each side of the sample is less than 1%
A: Deformation amount of each side of the sample is 1% or more and less than 3%
B: Deformation amount of each side of the sample is 3% or less and less than 10%
C: Deformation amount of each side of the sample is 10% or less

### <Elongation>

For each of the compositions of Reference Examples 1-7, 10, Inventive Examples 8, 9, 11 and Comparative Examples 1-5, using a sample cut into 40 mm × 4 mm × 5 mm size, tensile test was performed at 25°C at a rate of 8.3 mm/sec to evaluate elongation based on following evaluation criteria. For the composition of Reference

Example 3, using a sample cut into 40 mm × 4 mm × 5 mm size, tensile test was performed at 25°C at a rate of 8.3 mm/sec to evaluate elongation based on following evaluation criteria. The results are shown in Table 1.

### «Evaluation Criteria»

S: 2,000% or more
A: 1,200% or more and less than 2000%
B: 700% or more and less than 1200%
C: less than 700%

### <Puncture Repair Ability (on Actual Vehicle)>

A nail having a diameter of 4.6 mm was pushed into a pneumatic tire having a sealant (thickness: 3 mm) produced using the tire sealant composition of each of Reference Examples 1-7, 10, Inventive Examples 8, 9, 11 and Comparative Examples 1-5, and the appearance of the sealant was observed to evaluate the puncture repair ability (on actual vehicle) based on the following evaluation criteria. A nail having a diameter of 4.6 mm was pushed into a pneumatic tire having a sealant (thickness: 3 mm) produced using the tire sealant composition of Reference Example 3, and the appearance of the sealant was observed to evaluate the puncture repair ability (on actual vehicle) based on the following evaluation criteria. The evaluation results are shown in Table 1.

### <<Evaluation Criteria>>

S: Sealant covers almost the entire nail
A: Sealant covers part of the nail
C: Sealant does not follow the nail, or the sealant tears off at the base of the nail.

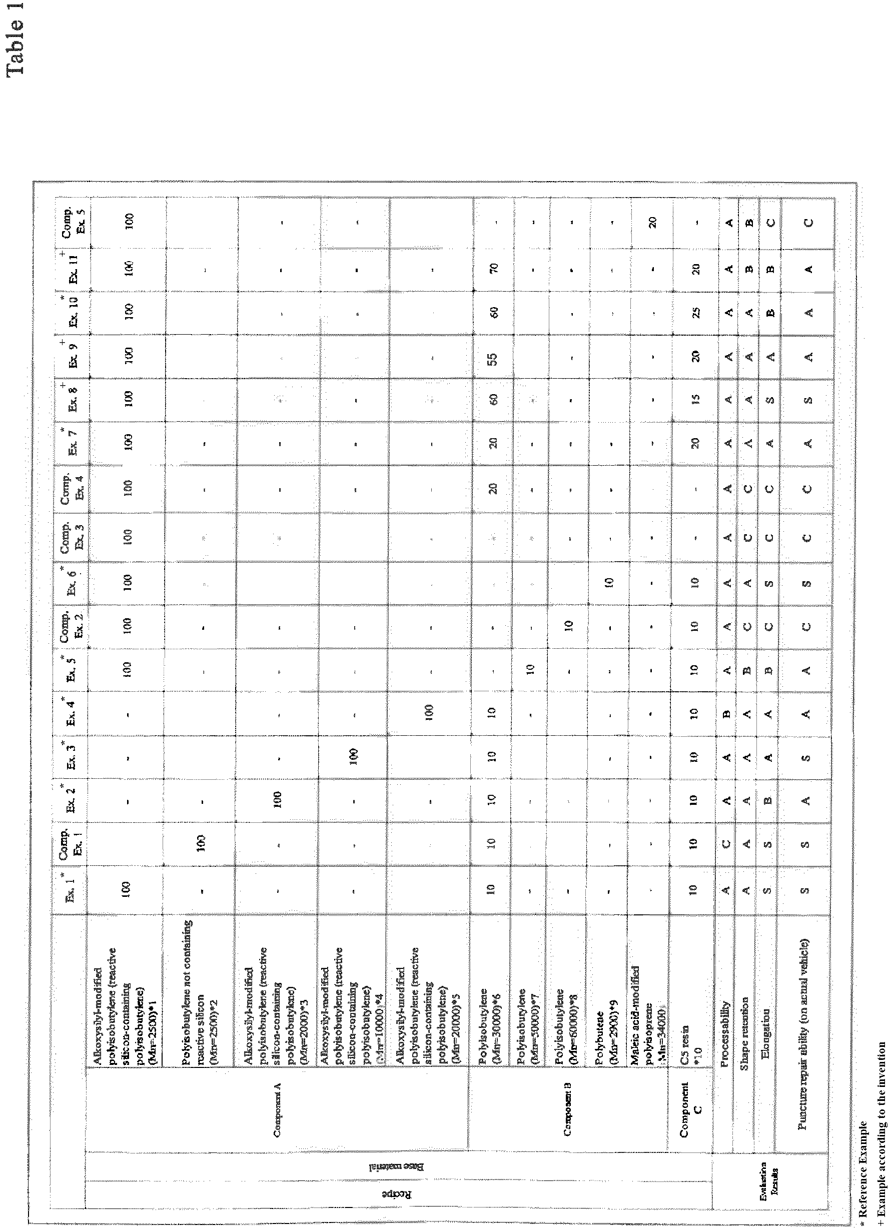

^{∗}1: Penguin Seal IB7000, manufactured by Sunstar Engineering Inc., number average molecular weight (Mn): 2,500
^{∗}2: Bridgestone Corporation, number average molecular weight (Mn): 2,500
^{∗}3: Bridgestone Corporation, number average molecular weight (Mn): 2,000
^{∗}4: Bridgestone Corporation, number average molecular weight (Mn): 10,000
^{∗}5: Bridgestone Corporation, number average molecular weight (Mn): 20,000
^{∗}6: Tetrax 3T, manufactured by JXTG Nippon Oil & Energy Corporation, number average molecular weight (Mn): 30,000
^{∗}7: Tetrax 5T, manufactured by JXTG Nippon Oil & Energy Corporation, number average molecular weight (Mn): 50,000
^{∗}8: Tetrax 6T, manufactured by JXTG Nippon Oil & Energy Corporation, number average molecular weight (Mn): 60,000
^{∗}9: HV 1900, manufactured by JXTG Nippon Oil & Energy Corporation, number average molecular weight (Mn): 2,900
^{∗}10: Quinton A100, manufactured by Zeon Corporation

### REFERENCE SIGNS LIST

- 1: Bead
- 2: Sidewall
- 3: Tread
- 4: Bead core
- 5: Carcass
- 6: Belt
- 7: Sealant
- 8: Inner liner

## Claims

1. A pneumatic tire, in which a tire sealant composition is used having a cured product of the curable composition as a sealant, said tire sealant composition comprising a curable composition comprising the following components A to C:
A: an alkoxysilyl-modified polyisobutylene;
B: one or more polymers having a number average molecular weight of 50,000 or less, the polymers being selected from the group consisting of polybutene, polyisobutylene, polyisobutylene butadiene, polypentene, and polyisopentene; and
C: one or more resins selected from the group consisting of C5 resin, C9 resin, C5-C9 resin, dicyclopentadiene resin, rosin resin, alkylphenol resin, and terpene phenol resin;
wherein the component B is included in an amount of 50 parts by mass to 120 parts by mass per 100 parts by mass of the component A, and
wherein the component C is included in an amount of 10 parts by mass to 20 parts by mass per 100 parts by mass of the component A.

2. The pneumatic tire of claim 1, wherein the component A of the curable composition has a number average molecular weight of 2,500 to 10,000.

3. Use of a tire sealant composition comprising a curable composition as defined in claim 1 or 2, in a pneumatic tire.

## Patentansprüche

1. Luftreifen, in dem eine Reifendichtmittelzusammensetzung verwendet wird, die ein gehärtetes Produkt der härtbaren Zusammensetzung als Dichtmittel aufweist, wobei die Reifendichtmittelzusammensetzung eine härtbare Zusammensetzung umfasst, die die folgenden Komponenten A bis C umfasst:
A: ein alkoxysilylmodifiziertes Polyisobutylen;
B: ein oder mehrere Polymere mit einem zahlenmittleren Molekulargewicht von 50.000 oder weniger, wobei die Polymere ausgewählt sind aus der Gruppe bestehend aus Polybuten, Polyisobutylen, Polyisobutylen-Butadien, Polypenten und Polyisopenten; und
C: ein oder mehrere Harze, die ausgewählt sind aus der Gruppe bestehend aus C5-Harz, C9-Harz, C5-C9-Harz, Dicyclopentadien-Harz, Kolophoniumharz, Alkylphenolharz und Terpenphenolharz;
wobei die Komponente B in einer Menge von 50 Massenteilen bis 120 Massenteilen pro 100 Massenteile der Komponente A enthalten ist, und
wobei die Komponente C in einer Menge von 10 Massenteilen bis 20 Massenteilen pro 100 Massenteile der Komponente A enthalten ist.

2. Luftreifen nach Anspruch 1, wobei die Komponente A der härtbaren Zusammensetzung ein zahlenmittleres Molekulargewicht von 2.500 bis 10.000 aufweist.

3. Verwendung einer Reifendichtmittelzusammensetzung, die eine härtbare Zusammensetzung nach Anspruch 1 oder 2 umfasst, in einem Luftreifen.

## Revendications

1. Pneumatique, dans lequel on utilise une composition d'étanchéité de pneu ayant un produit durci de la composition durcissable en tant que matériau d'étanchéité, ladite composition d'étanchéité de pneu comprenant une composition durcissable comprenant les composants A à C suivants :
A : un polyisobutylène à modification alcoxysilyle ;
B : un ou plusieurs polymères ayant une masse moléculaire moyenne en nombre de 50 000 ou moins, les polymères étant choisis dans le groupe constitué de polybutène, polyisobutylène, polyisobutylène-butadiène, polypentène, et poly-isopentène ; et
C : une ou plusieurs résines choisies dans le groupe constitué de résine en C5, résine en C9, résine en C5 à C9, résine dicyclopentadiénique, résine de colophane, résine d'alkylphénol, et résine de terpène-phénol ;
dans lequel le composant B est inclus en une quantité de 50 parties en masse à 120 parties en masse pour 100 parties en masse du composant A, et
dans lequel le composant C est inclus en une quantité de 10 parties en masse à 20 parties en masse pour 100 parties en masse du composant A.

2. Pneumatique selon la revendication 1, dans lequel le composant A de la composition durcissable a une masse moléculaire moyenne en nombre de 2500 à 10 000.

3. Utilisation d'une composition d'étanchéité de pneu comprenant une composition durcissable telle que définie dans la revendication 1 ou 2, dans un pneumatique.
